# EUROPÄISCHE PATENTSCHRIFT

(11) **EP 1 775 612 B1**
(45) Veröffentlichungstag und Bekanntmachung des Hinweises auf die Patenterteilung: **24.10.2012**
(21) Anmeldenummer: 06018763.0
(22) Anmeldetag: 07.09.2006
(51) Int. Cl.: G02B 6/38, G02B 6/42

(54) **Optische Kabelanschlussvorrichtung**
Optical cable connecting device
Dispositif de connexion de câble optique

(30) Priorität: 10.10.2005 DE 102005048755; 02.01.2006 DE 102006000702
(43) Veröffentlichungstag der Anmeldung: 18.04.2007
(73) Patentinhaber: Phoenix Contact GmbH & Co. KG, 32825 Blomberg (DE)
(72) Erfinder: Feldner, Ralf, 32760 Detmold (DE)
(74) Vertreter: Gesthuysen, von Rohr & Eggert

(56) Entgegenhaltungen:
- US-A- 4 047 797
- US-A- 5 151 961

## Beschreibung

Die Erfindung betrifft eine Anschlußvorrichtung zum Anschließen eines Kabels, insbesondere eines Lichtwellenleiters, an ein elektrisches Gerät, mit einem Gehäuse, mit einer Kabelverschraubung und mit einem Stecker zum Einstecken in eine korrespondierende Buchse des elektrischen Geräts, wobei das Gehäuse einen Kabelgang zum Ein- bzw. Durchführen des Kabels aufweist, der Stecker zumindest teilweise in dem Gehäuse gehalten ist und mit den Fasern bzw. Adern des in den Kabelgang eingeführten Kabels verbindbar ist.

Anschlußvorrichtungen zum Anschließen eines Kabels an ein elektrisches Gerät, insbesondere an eine Kommunikationseinrichtung, beispielsweise einen Computer, ein Notebook oder eine Telefonanlage, sind aus der Praxis bekannt. Das Kabel wird dabei dadurch einfach an das elektrische Gerät angeschlossen, daß das Kabel mit einem Stecker verbunden ist und dieser Stecker in eine korrespondierende Buchse an dem elektrischen Gerät eingesteckt wird. Um das Anschließen des Kabels an das elektrische Gerät zu vereinfachen, ist es üblich, daß zumindest ein Kabelende bereits mit einem Stecker verbunden ist.

Bekannte Anschlußvorrichtungen für elektrische Kabel bestehen standardmäßig aus einem kabelseitigen achtpoligen Stecker, der in der Praxis als RJ-45-Stecker oder Western-Stecker bekannt ist; und einer entsprechenden geräteseitigen Anschlußbuchse. Der Stecker ist dabei meist in Crimp-Anschlußtechnik mit dem Kabel verbunden, kann jedoch auch mit diesem verlötet sein. Der Stecker wird dabei meist mittels eines Rastarms beim Einstecken in die Buchse fixiert; kann jedoch auch durch an der Buchse bzw. an dem elektrischen Gerät vorhandene Befestigungshaken gehalten werden oder mittels Schrauben mit dem elektrischen Gerät verschraubt werden.

Daneben gibt es auch Anschlußvorrichtungen für optische Kabel, d. h. für Lichtwellenleiter. Bei einem Lichtwellenleiter handelt es sich um ein zum Lichttransport geeignetes optisches Bauelement, welches häufig aus einer Vielzahl, im Verhältnis zu ihrer Länge sehr dünner, zu einem Bündel zusammengefaßter einzelner Glasfasern oder Kunststoffasern, insbesondere Polymerfasern, besteht; unter einem Lichtwellenleiter soll im folgenden jedoch auch ein solcher mit einer Einzelfaser verstanden werden. Die einzelnen Glasfasern oder Kunststoffasern sind dabei in der Regel von einer Kunststoffummantelung umgeben. Durch die im Vergleich zu elektrischen Signalen wesentlich höhere Trägerfrequenz des Lichtes können größere Datenmengen in gleicher Zeit bzw. gleiche Datenmengen in kürzerer Zeit übertragen werden als mit herkömmlichen Koaxialkabeln. Außerdem gibt es bei Lichtwellenleitern keine EMV-Probleme. Gegenüber einer Glasfaser hat eine Polymerfaser wesentlich höhere Dämpfungswerte und einen größeren Durchmesser, sie ist jedoch preiswert und einfacher zu installieren.

Aufgrund der Weiterentwicklung sowohl der Sende- und Empfangseinrichtungen als auch der Lichtwellenleiter sind die Verluste bei der Übertragung von Signalen über Lichtwellenleiter immer weiter herabgesetzt worden. Somit hat sich auch die Verwendung von Lichtwellenleitern für die Übertragung von Signalen in den letzten Jahren stark erhöht. Deshalb besteht eine steigende Nachfrage nach einfach zu handhabenden und schnell anschließbaren Anschlußvorrichtungen für Lichtwellenleiter (Lichtwellenleiter-Steckem).

Aus der US 5,151,961 A ist eine spezielle Anschlußvorrichtung bekannt, mit der zwei Ferrulen axial zueinander ausgerichtet werden können. Die bekannte Anschlußvorrichtung besteht aus zwei Bauteilen, einem sogenannten "cardegde" Teil und einem "backplane" Teil. Das "card-edge" Teil weißt ein erstes Gehäuse mit einer ersten Ferrule, einem Ferrulenhalter und einem Abstützblock, eine Ausrichthülse, einem Halter für die Ausrichthülse und eine Mutter zur Befestigung des Halters am ersten Gehäuse auf. Das "backplane" Teil weißt ein zweites Gehäuse, eine einen Schlitz aufweisende Befestigungshülse und einen Federbügel auf, mit dem die Befestigungshülse an dem zweiten Gehäuse befestigt werden kann, wobei innerhalb der Befestigungshülse die zweite Ferrule mit einem Ferrulenhalter angeordnet ist. Bei Zusammenstecken der beiden Bauteile taucht der Halter für die Ausrichthülse der ersten Ferrule in das zugewandte Ende der Befestigungshülse ein, wobei durch den Federbügel eine begrenzte Bewegung der Befestigungshülse innerhalb des zweiten Gehäuses ermöglicht wird. Sind beide Bauteile vollständig zusammengesteckt, so rasten die Enden des Federbügels in entsprechenden Nuten im Halter für die Ausrichthülse der ersten Ferrule ein, so daß beiden Bauteile axial zueinander fixiert sind. Insgesamt weißt die bekannte Anschlußvorrichtung relativ vicle Einzelelemente und durch die beiden Gehäuse relativ große Abmessungen auf.

Für die Anschlußtechnik von Lichtwellenleiter gibt es darüber hinaus eine Vielzahl von standardisierten Steckverbindungen, die untereinander inkompatibel sind. Die häufigsten Standard-Lichtwellenleiter-Stecker sind der ST-Stecker, der PC/FC-Stecker und der SC-Stecker, wobei sich letzterer zunehmcnd durchsetzt. Der SC-Stecker (IEC 874-19) ist ein Lichtwellenleiter-Stecker, der sich als polarisierter Push/Pull-Stecker durch seine geringen Abmessungen und hohe Packungsdichte auszeichnet. Dieser Stecker hat ein quadratisches Design und kann für Multimodefasern und Monomodefasern benutzt werden, Mit dem Stecker können Simplex-, Duplex- und Mehrfachverbindungen aufgebaut werden. Durch seinen Aufbau ist er verdrehsicher und besitzt eine automatische Verriegelung mit der korrespondierenden Buchse. Zum Lösen eines derartigen Lichtwellenleiter-Steckers aus der korrespondierenden Buchse ist es erforderlich, das Steckergehäuse axial um einen kurzen Weg von ca. 1 bis 2 mm von der Buchse wegzuziehen. Dadurch kommt es zu einer gewollten Relativverschiebung des äußeren Steckergehäuses gegenüber dem die Ferrulen aufnehmenden Innengehäuse, wodurch die mechanische Verriegelung zwischen dem Innengehäuse des Steckers und der korrespondierenden Buchse gelöst wird.

Nachteilig ist hierbei jedoch, daß die bekannten Standard-Lichtwellenleiter-Stecker nur sehr bedingt in rauher industrieller Umgebung eingesetzt werden können. Daher sind Gehäuse entwickelt worden, welche die Standard-Lichtwellenleiter-Stecker aufnehmen und gegen mechanische Beanspruchungen sowie gegen Schmutz und Feuchtigkeit schützen. Hierzu weist die bekannte Anschlußvorrichtung (vgl. "Phoenix Contact NEUHEITEN Katalog 2004", Seite 152) neben dem den eigentlichen Stecker aufnehmenden Gehäuse insbesondere eine Kabelverschraubung zur Abdichtung des anzuschließenden Kabels auf. Problematisch bei der bekannten Anschlußvorrichtung ist jedoch, daß die gewünschte sichere und feste Aufnahme des Steckers und des anzuschließenden Lichtwellenleiters in dem Gehäuse, insbesondere die zur Abdichtung erforderliche Fixierung des Lichtwellenleiters mittels der Kabelverschraubung, die für die Entriegelung des Steckers erforderliche axiale Verschiebbarkeit des Steckergehäuses behindert.

Der vorliegenden Erfindung liegt daher die Aufgabe zugrunde, eine eingangs beschriebene Anschlußvorrichtung zur Verfügung zu stellen, die bei möglichst kompakter Bauform sowohl einen sicheren mechanischen Schutz des Steckers und des anzuschließenden Kabels als auch eine einfache Montierbarkeit und Demontierbarkeit des Steckers mit einer korrespondierenden Buchse ermöglicht.

Diese Aufgabe ist bei der eingangs beschriebenen Anschlußvorrichtung gemäß einer ersten Lehre der Erfindung dadurch gelöst, daß das Gehäuse zweiteilig ausgebildet ist, nämlich ein erstes Gehäuseteil zur Aufnahme des Steckers und ein zweites Gehäuseteil zur Verbindung mit der eine Überwurfmutter aufweisenden Kabelverschraubung aufweist, daß das dem zweiten Gehäuseteil zugeordnete Ende des ersten Gehäuseteils einen Verbindungsbereich aufweist, der derart ausgebildet ist, daß das erste Gehäuseteil mit dem zweiten Gehäuseteil verbindbar und im verbundenen Zustand axial verschiebbar ist, wobei am zweiten Gehäuseteil mindestens ein Anschlag und am ersten Gehäuseteil mindestens ein Gegenanschlag ausgebildet ist, so daß das zweite Gehäuseteil und das erste Gehäuseteil um einen definierten Weg axial zueinander verschiebbar sind.

Gemäß einer gemäß einer zweiten, alternativen Lehre der Erfindung ist die zuvor genannte Aufgabe dadurch gelöst, daß die Kabelverschraubung zweiteilig ausgebildet ist, nämlich ein hülsenförmiges Teil mit einem Außengewinde und eine auf das hülseförmige Teil aufschraubbare Überwurfmutter mit einem korrespondierenden Innengewinde aufweist, daß das der Kabelverschraubung zugeordnete Ende des Gehäuses einen Verbindungsbereich aufweist, der derart ausgebildet ist, daß das hülseförmige Teil mit dem Verbindungsbereich verbindbar ist, und daß im verbundenen Zustand das Gehäuse und das hülseförmige Teil relativ zueinander axial verschiebbar sind, wobei im hülseförmigen Teil der Kabelverschraubung mindestens ein Anschlag und am Verbindungsbereich des Gehäuses mindestens ein Gegenanschlag ausgebildet ist, so daß das Gehäuse und das hülsenförmige Teil um einen definierten Weg axial zueinander verschiebbar sind.

Auch wenn die erfindungsgemäße Anschlußvorrichtung insbesondere zum Anschließen eines Lichtwellenleiters geeignet ist, so kann sie auch zum Anschluß eines elektrischen Kabels verwendet werden. Neben der zuvor in Verbindung mit den bekannten Lichtwellenleiter-Steckern beschriebenen Problematik sind nämlich auch Anwendungsfälle vorstellbar, bei denen der Stecker zum Anschluß eines elektrischen Kabels einerseits zur Montage oder Demontage ein Rastspiel benötigt, andererseits zum mechanischen Schutz und zur Abdichtung zugentlastet und damit axial fixiert sein soll.

Den beiden zuvor genannten alternativen Lösungen der vorliegenden Erfindung ist gemeinsam, daß zwischen dem den Stecker aufnehmenden Gehäuse bzw. ersten Gehäuseteil und der das Kabel abdichtenden und axial fixierenden Überwurfmutter ein zusätzliches Bauteil angeordnet ist, welches eine axiale Verschiebung des Gehäuses bzw. des ersten Gehäuseteils gegenüber der das Kabel abdichtenden und fixierenden Überwurfmutter und damit gegenüber dem Kabel ermöglicht. Durch die Ausbildung eines Anschlags am zweiten Gehäuseteil bzw. am hülsenförmigen Teil der Kabelverschraubung und eines Gegenanschlags am ersten Gehäuseteil bzw. am Verbindungsbereich des Gehäuses ist dabei gewährleistet, daß die axiale Verschiebbarkeit auf eine vorgegebene Länge beschränkt ist. Dadurch wird sowohl eine Beschädigung des Steckers bzw. des mit dem Stecker verbundenen Kabels als auch eine ungewollte Demontage der Anschlußvorrichtung verhindert.

Gemäß einer ersten bevorzugten Ausgestaltung der ersten Lehre der Erfindung ist im Verbindungsbereich des ersten Gehäuseteils mindestens ein Fenster und an der dem ersten Gehäuseteil zugeordneten Seite des zweiten Gehäuseteils mindestens ein Rastarm mit einem Vorsprung ausgebildet, wobei der Vorsprung des Rastarms im verbundenen Zustand von erstem Gehäuseteil und zweitem Gehäuseteil in das Fenster eingreift. Bei dieser Ausgestaltung wird somit der maximale Verschiebungsweg des ersten Gehäuseteils gegenüber dem zweiten Gehäuseteil durch die Abmessungen des Fensters und des Rastarmes bzw. des Vorsprungs bestimmt. Durch die Ausbildung des Rastarms und des Fensters ist darüber hinaus im montierten Zustand des ersten Gehäuseteils mit dem zweiten Gehäuseteil eine Verdrehsicherung der beiden Gehäuseteile gegeneinander gegeben.

Vorzugsweise weist dabei der Vorsprung am Rastarm eine Einführschräge und eine Stufe bzw. Kante auf. Durch die Einführschräge wird dabei die Montage bzw. das Zusammenstecken der beiden Gehäuseteile erleichtert. Zur Begrenzung der axialen Verschiebbarkeit des ersten Gehäuseteils in beide Richtungen ist darüber hinaus am ersten Gehäuseteil ein zweiter Anschlag vorgesehen. In der ersten Position des ersten Gehäuseteils liegt dann der erste Rand des Fensters an der Stufe des Vorsprungs an, während in der zweiten - axial verschobenen - Position des ersten Gehäuseteils das freie Ende des Rastarms am zweiten Anschlag anstößt. Das zweite Gehäuseteil weist somit mit der Stufe des Vorsprungs und dem freien Ende des Rastarms ebenso zwei Anschläge auf, wie das erste Gehäuseteil mit dem ersten Rand des Fensters und dem zweiten Anschlag zwei Gegenanschläge aufweist.

Bei einer alternativen Ausgestaltung ist im Verbindungsbereich des ersten Gehäuseteils anstelle eines Fensters eine Lasche ausgebildet, durch die sich der Rastarm des zweiten Gehäuseteils im montierten Zustand der beiden Gehäuseteile erstreckt. Auch hierbei weist der Rastarm, wie zuvor beschrieben, einen Vorsprung mit einer Einführschräge und einer Stufe auf, wobei nun zur beidseitigen Begrenzung der axialen Verschieblichkeit am zweiten Gehäuseteil ein zweiter Anschlag ausgebildet ist. In der ersten Position des ersten Gehäuseteils liegt dann die dem zweiten Gehäuseteil abgewandte Kante der Lasche an der Stufe des Vorsprungs an, während in der zweiten Position des ersten Gehäuseteils die dem zweiten Gehäuseteil zugewandte Stirnseite des ersten Gehäuseteils am zweiten Anschlag anliegt. Bei dieser Ausführungsform wird der maximal mögliche axiale Verschiebungsweg durch die Länge des Rastarms und insbesondere durch den Abstand zwischen der Stufe des Vorsprungs und dem zweiten Anschlag sowie durch die Position und Breite der Lasche bestimmt.

Zur Gewährleistung der gewünschten Dichtigkeit des zweiteiligen Gehäuses ist vorteilhafter Weise an der dem ersten Gehäuseteil zugeordneten Seite des zweiten Gehäuseteils ein zylindrischer Fortsatz ausgebildet, der sich im montierten Zustand der beiden Gehäuseteile in das erste Gehäuseteil erstreckt. Dabei überlappen sich das Ende des Fortsatzes und das in dem ersten Gehäuseteil ausgebildete Fenster vollständig, so daß es keinen offenen Durchbruch zum Kabelraum gibt. Die Dichtigkeit des zweiteiligen Gehäuses kann dabei dadurch weiter verbessert werden, daß im Bereich des Fortsatzes des zweiten Gehäuseteils ein entsprechendes Dichtelement angeordnet ist. Das Dichtelement ist dabei so ausgebildet und angeordnet, daß es ein axiale Verschiebung zwischen dem ersten Gehäuseteil und dem zweiten Gehäuseteil nicht, jedenfalls nicht merklich, behindert.

Bei der Anschlußvorrichtung gemäß der zweiten Lehre der Erfindung wird die axiale Verschiebbarkeit zwischen dem Gehäuse und dem hülsenförmigen Teil der Kabelverschraubung vorzugsweise dadurch realisiert, daß im hülsenförmigen Teil der Kabelverschraubung mindestens eine Ausnehmung und am Verbindungsbereich des Gehäuses mindestens ein korrespondierender Vorsprung ausgebildet ist, wobei der Vorsprung im verbundenen Zustand von Gehäuse und hülsenförmigem Teil in die Ausnehmung eingreift und darin um einen definierten Weg axial verschiebbar ist.

Dabei weist der Vorsprung am Verbindungsbereich des Gehäuses vorzugsweise eine Einführschräge und eine Stufe auf, so daß durch die Einführschräge die Montage von Gehäuse und hülsenförmigem Teil der Kabelverschraubung erleichtert wird und durch die Stufe ein genauer Gegenanschlag ausgebildet ist. In der ersten Position des Gehäuses liegt dann die Stufe des Vorsprungs am ersten Rand der Ausnehmung an, während in der zweiten- axial verschobenen - Position des Gehäuses die Stirnseite des Verbindungsbereichs am gegenüberliegenden Rand der Ausnehmung anstößt. Der maximal mögliche Verschiebungsweg kann somit auch hierbei einfach durch die Abmessungen der Ausnehmung und des Vorsprungs eingestellt werden.

Wie bei der ersten Lehre der Erfindung so kann auch bei der zweiten Lehre der Erfindung die Dichtigkeit zwischen dem Gehäuse und der Kabelverschraubung, insbesondere dem ersten Teil der Kabelverschraubung, d. h. dem hülsenförmigen Teil, dadurch weiter verbessert werden, daß im Verbindungsbereich des Gehäuses und/oder im hülsenförmigen Teil der Kabelverschraubung eine Nut zur Aufnahme eines Dichtelements ausgebildet ist, wobei das Dichtelement wiederum so ausgebildet bzw. angeordnet ist, daß es die axiale Verschiebbarkeit zwischen dem Gehäuse und dem hülsenförmigen Teil der Kabelverschraubung nicht beeinflußt.

Nachfolgend sollen noch einige vorteilhafte Ausgestaltungen der erfindungsgemäßen Anschlußvorrichtung erwähnt werden, die sowohl bei der ersten Alternative gemäß der ersten Lehre der Erfindung als auch bei der zweiten Alternative gemäß der zweiten Lehre der Erfindung realisiert werden können.

Zur Verbesserung der Abdichtung der Kabelverschraubung ist dabei insbesondere vorgesehen, daß das zweite Gehäuseteil an dem der Kabelverschraubung zugeordneten Ende bzw. das der Überwurfmutter zugeordnete Ende des hülsenförmigen Teils der Kabelverschraubung als Dichtungskrone ausgebildet ist. Beim Aufschrauben der Überwurfmutter wird dabei die Dichtungskrone, die eine Mehrzahl von axial verlaufenden Einschnitten aufweist, durch das sich konisch verjüngende Ende der Überwurfmutter zusammengedrückt, wodurch das Kabel axial fixiert und somit der mit dem Kabel verbundene Stecker zugentlastet wird. Außerdem kann innerhalb der Dichtungskrone eine Kabeldichtung angeordnet sein, wodurch die Abdichtung des Gehäuseinnenraums bzw. des Kabelgangs beim Aufschrauben der Überwurfmutter verbessert wird.

Zum mechanischen Schutz des anzuschließenden Kabels ist darüber hinaus vorzugsweise vorgesehen, daß die Überwurfmutter mit einer flexiblen Knickschutztülle verbunden ist. Dadurch wird ein Abknicken des Kabels am kabelseitigen Ende der Anschlußvorrichtung verhindert. Schließlich sind an dem Gehäuse bzw. dem ersten Gehäuseteil mindestens zwei federnde Rastmittel zur mechanischen Fixierung der Anschlußvorrichtung an einer Buchse bzw. an einem elektrischen Gerät angeordnet.

Im einzelnen gibt es nun eine Vielzahl von Möglichkeiten, die erfindungsgemäße Anschlußvorrichtung auszugestalten und weiterzubilden. Hierzu wird verwiesen sowohl auf die den Patentansprüchen 1 und 10 nachgeordneten Patentansprüche, als auch auf die Beschreibung zweier bevorzugter Ausführungsbeispiele anhand der Zeichnung. In der Zeichnung zeigen
- Fig. 1: eine perspektivische Darstellung eines Ausführungsbeispiels der Anschlußvorrichtung gemäß der ersten Lehre der Erfindung,
- Fig. 2: eine Explosionsdarstellung der Anschlußvorrichtung gemäß Fig. 1,
- Fig. 3: die Anschlußvomchtung gemäß Fig. 1 im Längsschnitt, mit dem ersten Gehäuseteil in der ersten Position (Fig. 3a) und dem ersten Gehäuseteil in der zweiten Position (Fig. 3b),
- Fig. 4: zwei vergrößerte Darstellungen eines Teils der Anschlußvorrichtung im Längsschnitt gemäß Fig. 3, mit dem ersten Gehäuseteil in der ersten Position (Fig. 4a) und dem zweiten Gehäuseteil in der zweiten Position (Fig. 4b),
- Fig. 5: eine Explosionsdarstellung einer erfindungsgemäßen Anschlußvorrichtung gemäß der zweiten Lehre der Erfmdung,
- Fig. 6: die Anschlußvorrichtung gemäß Fig. 5 im Längsschnitt, und
- Fig. 7: zwei vergrößerte Darstellungen der Anschlußvorrichtung gemäß Fig. 6 einmal mit dem Gehäuse in der ersten Position (Fig. 7a) und einmal mit dem Gehäuse in der zweiten Position (Fig. 7b).

Die Figuren zeigen zwei unterschiedliche Ausführungsformen einer Anschlußvorrichtung 1 zum Anschließen eines Kabels, wobei bei den dargestellten Ausführungsbeispielen die Anschlußvorrichtung 1 zum Anschließen eines Lichtwellenleiterkabels 2 mit zwei Lichtwellenleitern 3, 4 vorgesehen ist. Die Anschlußvorrichtung 1 weist ein Gehäuse 5, eine Kabelverschraubung 6 und einen Stecker 7 zum Einstecken in eine korrespondierende Buchse 8 eines elektrischen Geräts, von dem hier nur eine Frontplatte 9 dargestellt ist, auf. Zum Einführen bzw. Durchführen des Lichtwellenleiterkabels 2 weist das Gehäuse 5 einen Kabelgang 10 auf.

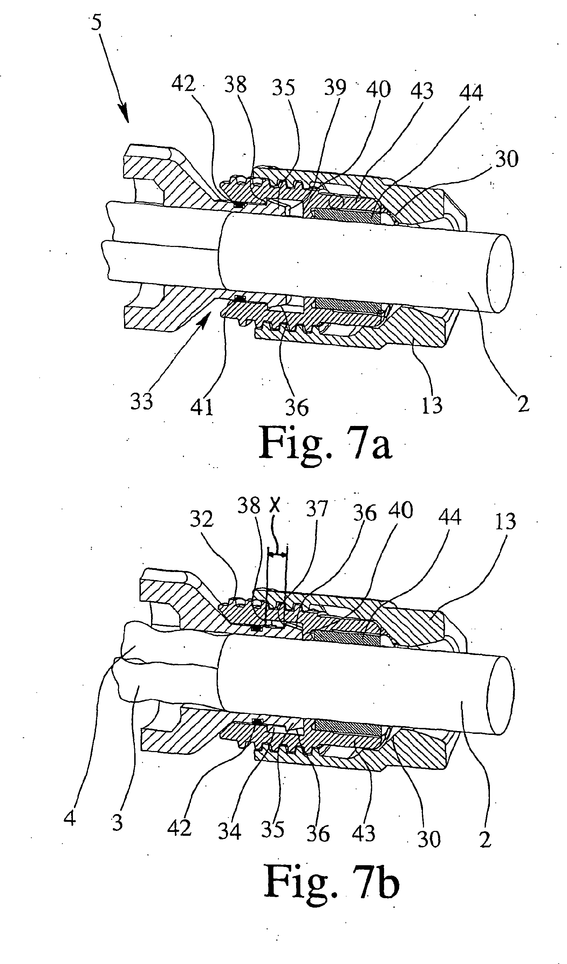

Die einzelnen Glasfasern oder Kunststofffasern der nur in Fig. 7 dargestellten Lichtwellenleiter 3, 4 können dabei vor dem Einführen des Kabels 2 in das Gehäuse 5 bereits mit dem Stecker 7 verbunden sein, der seinerseits mit seinem hinteren Bereich im Gehäuse 5 gehalten und dabei mit dem Gehäuse 5 axial fixiert ist. Daneben ist es jedoch auch möglich, daß das Lichtwellenleiterkabel 2 zunächst durch das Gehäuse 5 bzw. den Kabelgang 10 durchgeschoben, anschließend abisoliert und dann erst mit dem Stecker 7 verbunden wird.

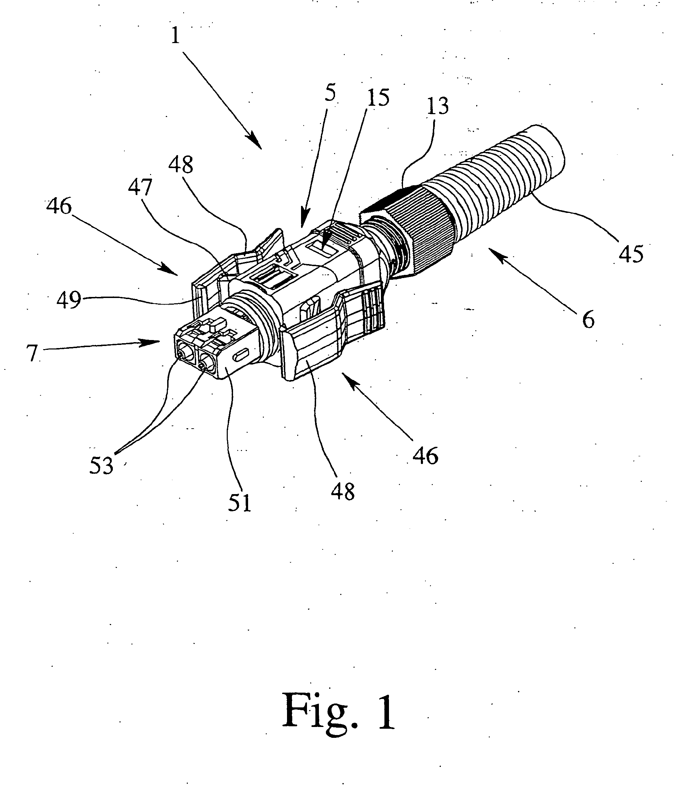

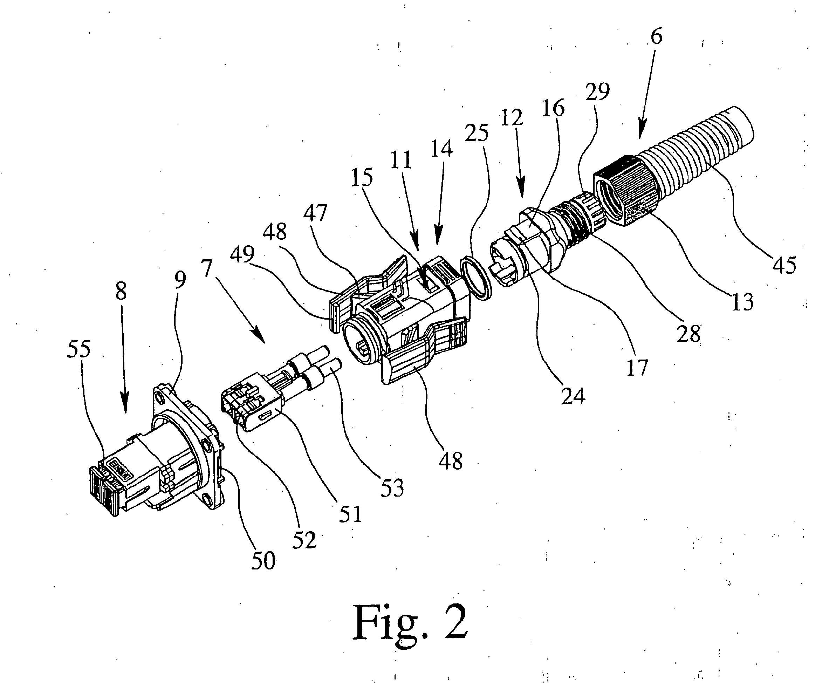

Bei dem in den Fig. 1 bis 4 dargestellten ersten Ausführungsbeispiel der erfindungsgemäßen Anschlußvorrichtung .1 weist das Gehäuse 5 ein erstes Gehäuseteil 11 zur Aufnahme des Stecker 7 und ein zweites Gehäuseteil 12 zur Verbindung mit der eine Überwurfmutter 13 aufweisenden Kabelverschraubung 6 auf. Das Gehäuse 5 ist somit zweiteilig ausgebildet, wie dies insbesondere aus der Fig. 2 ersichtlich ist. Dabei weist das erste Gehäuseteil 11 einen Verbindungsbereich 14 auf, der derart ausgebildet ist, daß das erste Gehäuseteil 11 mit dem zweiten Gehäuseteil 12 verrastbar ist. Wesentlich ist dabei jedoch, daß die Verrastung zwischen dem ersten Gehäuseteil 11 und dem zweiten Gehäuseteil 12 so ausgebildet ist, daß eine axiale Verschiebung des ersten Gehäuseteils 11 gegenüber dem zweiten Gehäuseteil 12 möglich ist, wobei die axiale Verschiebung jedoch begrenzt ist.

Hierzu ist im Verbindungsbereich 14 des ersten Gehäuseteils 11 ein Fenster 15 ausgebildet, in das im montierten Zustand von erstem Gehäuseteil 11 und zweitem Gehäuseteil 12 ein am zweiten Gehäuseteil 12 vorgesehener Rastarm 16 mit einem daran ausgebildeten Vorsprung 17 eingreift. Der Vorsprung 17 weist dabei eine Einführschräge 18 und eine Stufe 19 auf, die sich unmittelbar an die Einführschräge 18 anschließt. Die Einführschräge 18 verläuft entgegengesetzt zur Einsteckrichtung des zweiten Gehäuseteils 12 in das erste Gehäuseteil 11, so daß durch die Einführschräge 18 und die Elastizität des Rastarms 16 das zweite Gehäuseteil 12 einfach in das erste Gehäuseteil 11 eingeschoben und darin verrastet werden kann. Dabei ist das zweite Gehäuseteil 12 - und mit ihm auch das Kabel 2 - durch das Einrasten des Vorsprungs 17 des Rastarms 16 in das Fenster 15 auch gegenüber dem ersten Gehäuseteil 11 verdrehsicher gehalten

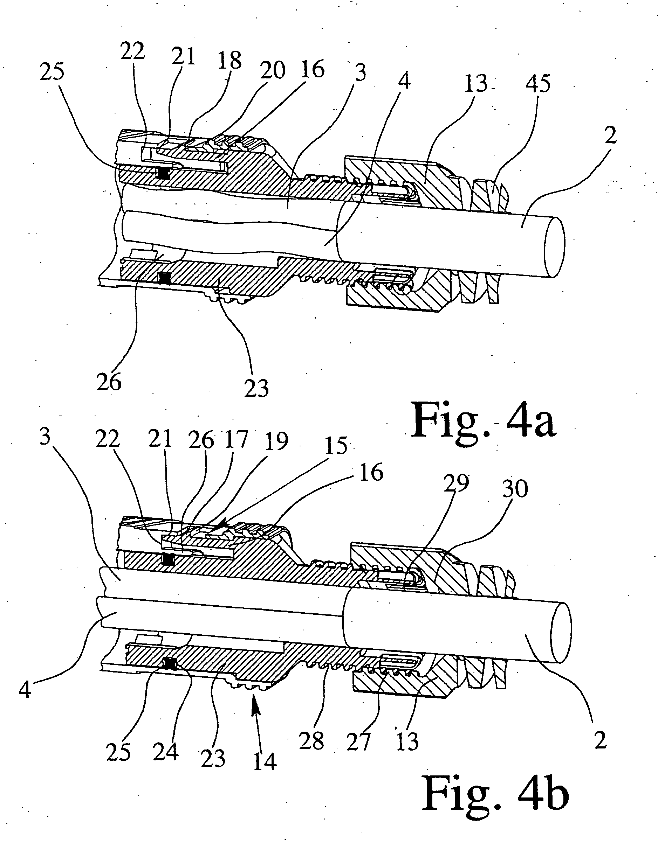

Insbesondere anhand der Fig. 4a und 4b sind die beiden Endpositionen des ersten Gehäuseteils 11 relativ zum zweiten Gehäuseteil 12 ersichtlich. In der in Fig. 4a dargestellten ersten Position des ersten Gehäuseteils 11 liegt dabei der erste Rand 20 des Fensters 15 an der Stufe 19 des Vorsprungs 17 an. In der in Fig. 4b dargestellten zweiten Position des ersten Gehäuseteils 11 ist dagegen die Stufe 19 des Vorsprungs 17 von dem Rand 20 des Fensters 15 um den axialen Weg x verschoben, wobei die Verschiebung dadurch begrenzt ist, daß das freie Ende 21 des Rastarms 16 am im ersten. Gehäuseteil 11 ausgebildeten zweiten Anschlag 22 anliegt.

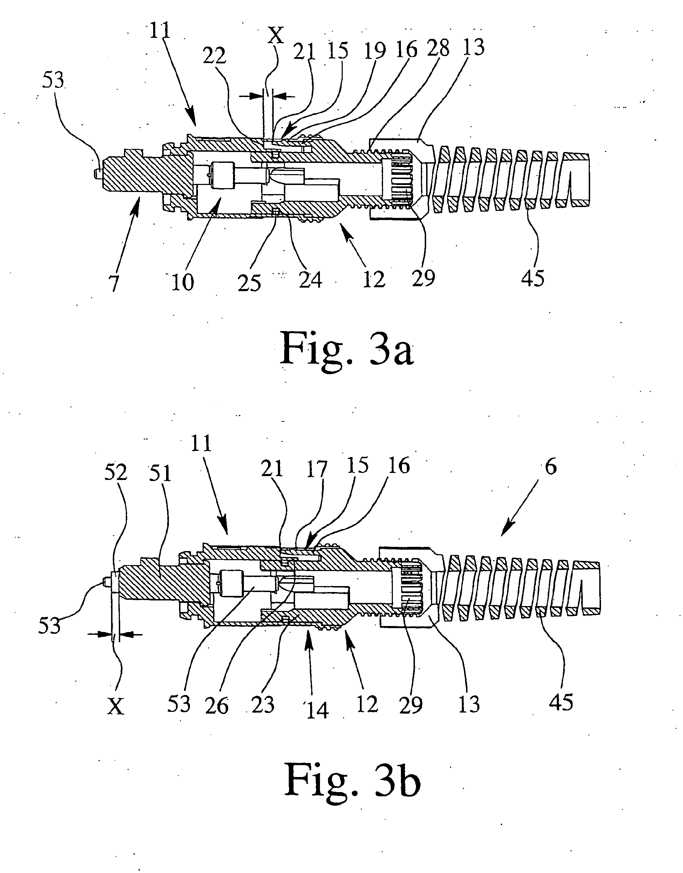

Da das zweite Gehäuseteil 12 axial fest mit der Kabelverschraubung 6 verbunden ist und diese im fertig montierten Zustand auch das eingeführte Lichtwellenleiter-Kabel 2 axial fixiert, bewirkt die axiale Verschiebung des ersten Gehäuseteils 11 nicht nur eine Verschiebung gegenüber dem zweiten Gehäuseteil 12 sondern auch gegenüber dem durch die Kabelverschraubung 6 fixierten Lichtwellenleiter-Kabel 2. Da außerdem auch der Stecker 7 axial am ersten Gehäuseteil 11 fixiert ist, erfolgt somit auch eine axiale Verschiebung des Steckers 7 relativ zu dem Lichtwellenleiter-Kabel 2. Dies ist insbesondere aus den beiden Darstellungen in Fig. 3 ersichtlich und wird später noch genauer erläutert.

Beispielsweise aus der Fig. 2 ist ersichtlich, daß das zweite Gehäuseteil 12 auf der dem ersten Gehäuseteil 11 zugeordneten Seite einen zylindrischen Fortsatz 23 aufweist, der sich im montierten Zustand innerhalb des Verbindungsbereichs 14 des ersten Gehäuseteils 11 befindet. Aus der Fig. 3 ist dabei ersichtlich, daß der Fortsatz 23 derart dimensioniert ist, daß sich der Fortsatz 23 über den Bereich des Fensters 15 im Verbindungsbereich 14 des ersten Gehäuseteils 11 erstreckt, so daß es keinen offenen Durchbruch im Gehäuse 5 zum Kabelgang 10 gibt. Die Abdichtung des Kabelgangs 10 ist darüber hinaus dadurch weiter gewährleistet, daß im Fortsatz 23 des zweiten Gehäuseteils 12 eine Nut 24 zur Aufnahme eines Dichtelements 25 ausgebildet ist, die den Fortsatz 23 gegen einen korrespondierenden kleineren Fortsatz 26 am ersten Gehäuseteil 11 abdichtet. Das Dichtelement 25 bzw. der Fortsatz 26 ist dabei so ausgebildet, daß das Dichtelement 25 die axiale Verschieblichkeit zwischen dem ersten Gehäuseteil 11 und dem zweiten Gehäuseteil 12 nicht verhindert.

In den Fig. 2 bis 4 ist außerdem dargestellt, daß das zweite Gehäuseteil 12 an dem der Kabelverschraubung 6 zugeordneten Ende ein mit dem Innengewinde 27 der Überwurfmutter 13 korrespondierendes Außengewinde 28 und eine Dichtungskrone 29 aufweist. Beim Aufschrauben der Überwurfmutter 13 auf das Außengewinde 28 des zweiten Gehäuseteils 12 wird dabei die Dichtungskrone 29 durch das sich verjüngende Ende 30 der Überwurfmutter 13 zusammengedrückt, wodurch das Lichtwellenleiter-Kabel 2 sowohl abgedichtet als auch zugentlastet, d.h. axial fixiert wird.

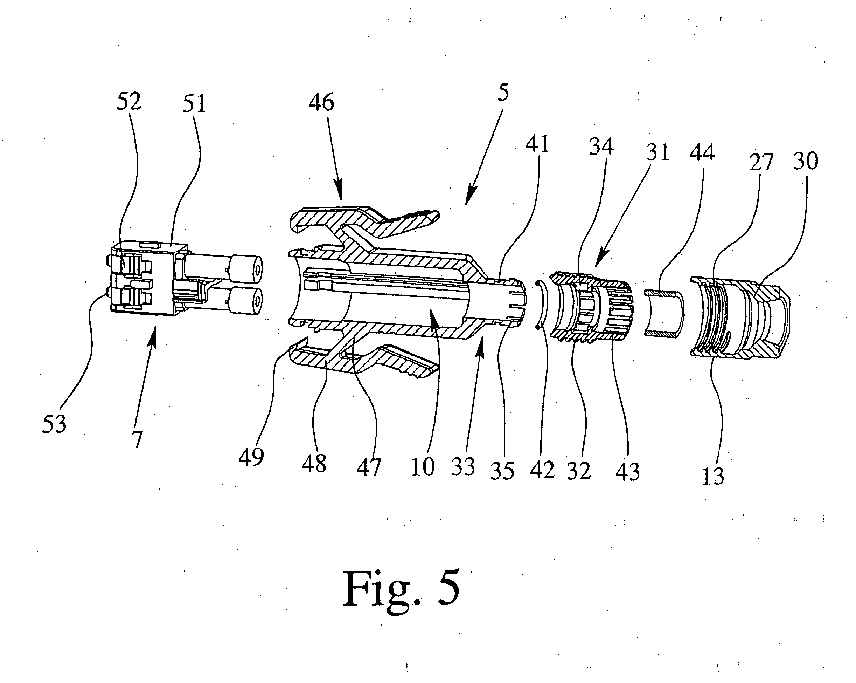

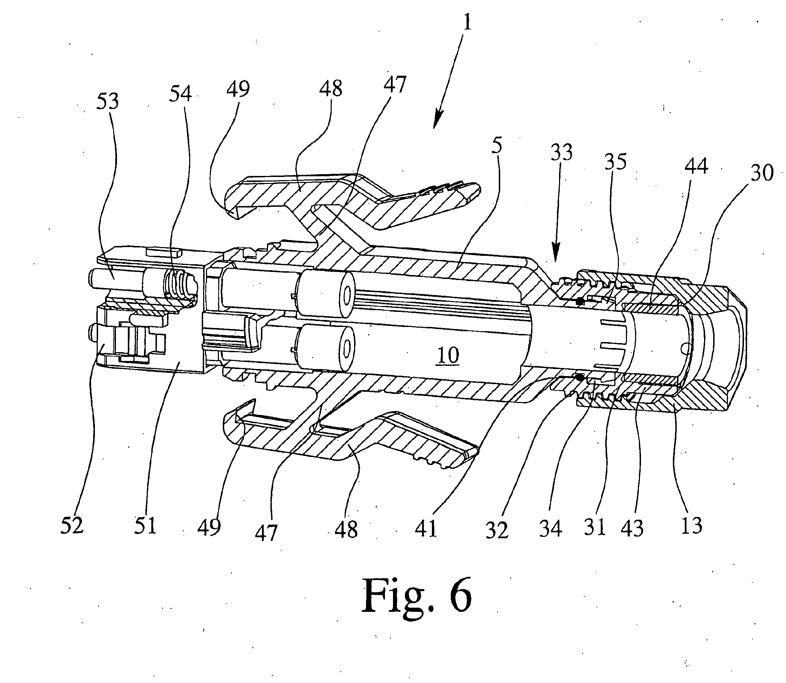

Das in den Fig. 5 bis 7 dargestellte zweite Ausführungsbeispiel der Anschlußvorrichtung 1 weist ebenfalls ein Gehäuse 5, eine Kabelverschraubung 6 und einen Stecker 7 zum Anschluß der Fasern der Lichtwellenleiter 3, 4 des Lichtwellenleiter-Kabels 2 auf. Im Unterschied zu dem zuvor beschriebenen Ausführungsbeispiel ist nun jedoch nicht das Gehäuse 5 sondern die Kabelverschraubung 6 zweiteilig ausgebildet. Die Kabelverschraubung 6 weist nämlich neben der Überwurfmutter 13 noch ein hülsenförmiges Teil 31 mit einem Außengewinde 32 auf, auf das die Überwurfmutter 13 aufschraubbar ist. Von ihrer äußeren Gestaltung ähnelt dabei das hülseförmige Teil 31 dem kabelseitigen Ende des zweiten Gehäuseteils 12 gemäß den Fig. 1 bis 4.

Das der Kabelverschraubung 6 zugeordnete Ende des Gehäuses 5 weist wiederum einen, nun jedoch anders ausgestalteten, Verbindungsbereich 33 auf, der derart ausgebildet ist, daß das hülsenförmige Teil 31 mit dem Verbindungsbereich 33 einerseits verrastbar andererseits jedoch begrenzt axial verschiebbar ist.

Hierzu sind in dem hülsenförmigen Teil 31 der Kabelverschraubung 6 mehrere Ausnehmungen 34 und am Verbindungsbereich 33 des Gehäuses 5 mehrere Vorsprünge 35 ausgebildet, die im montierten Zustand von Gehäuse 5 und hülsenförmigen Teil 31 der Kabelverschraubung 6 in die Ausnehmungen 34 eingreifen und darin um einen definierten Weg x axial verschiebbar sind. Die Vorsprünge 35 des Verbindungsbereichs 33 weisen dabei ähnlich dem Vorsprung 17 des Rastarms 16 gemäß den Fig. 1 bis 4 jeweils eine Einführschräge 36 und eine Stufe 37 auf. Durch die Einführschräge 36 wird wiederum das Aufschieben des hülsenförmigen Teils 31 auf den Verbindungsbereich 33 des Gehäuses 5 erleichtert.

Insbesondere aus der Fig. 5 ist dabei ersichtlich, daß der Verbindungsbereich 33 mehrere, durch axiale Schlitze voneinander getrennte Vorsprünge 35 und das hülsenförmige Teil 31 mehrere durch axiale Stege voneinander getrennte Ausnehmungen 34 aufweist. Durch diese Segmentierung wird ein radiales Verdrehen von hülsenförmigen Teil 31 und Verbindungsbereich 33 und damit von Kabelverschraubung 6 und Gehäuse 5 im montierten Zustand verhindert. Es ist somit auch bei dieser Ausführungsvariante auf einfache Art und Weise eine Verdrehsicherung realisiert.

In der ersten Position des Gehäuses 1, die in der Fig. 7a dargestellt ist, liegt die Stufe 37 des Vorsprungs 35 am ersten Rand 38 der Ausnehmung 34 an. Wird das Gehäuse 5 um einen Weg x verschoben, so liegt die Stirnseite 39 des Verbindungsbereichs 31, im dargestellten Ausführungsbeispiel das Ende des. Vorsprungs 35, am gegenüberliegenden Rand 40 der Ausnehmung 34 an. Das Gehäuse 5 befindet sich dann in der in Fig. 7b dargestellten zweiten Position. Durch die Dimensionierung der Ausnehmung 34 und des Vorsprungs 35 wird somit der maximal mögliche axiale Verschiebungsweg x festgelegt.

Zur Gewährleistung einer ausreichenden Dichtigkeit und Zugentlastung ist auch bei dem zweiten Ausführungsbeispiel eine Nut 41 zur Aufnahme eines Dichtelements 42 vorgesehen, wobei die Nut 41 in dem Verbindungsbereich 33 des Gehäuses 5 angeordnet ist. Darüber hinaus weist das hülseförmige Teil 31 neben einem Außengewinde 32 auch eine Dichtungskrone 43 auf, innerhalb der zusätzlich eine Kabeldichtung 44 angeordnet ist. Eine solche Kabeldichtung 44 kann selbstverständlich auch bei dem Ausführungsbeispiel der Anschlußvorrichtung 1 gemäß den Fig. 1 bis 4 innerhalb der dort am zweiten Gehäuseteil 12 ausgebildeten Dichtungskrone 29 angeordnet sein.

Als zusätzlicher mechanischer Schutz für das anzuschließende Lichtwellenleiter-Kabel 2 weist die in den Fig. 1 bis 4 dargestellte Kabelverschraubung 6 eine mit der Überwurfmutter 13 verbundene Knickschutztülle 45 auf. Außerdem kann den Figuren noch entnommen werden, daß an dem Gehäuse 5 bzw. dem ersten Gehäuseteil 11 zwei federnde Rastmittel 46 angeordnet sind, die jeweils aus einem über einen Steg 47 mit dem Gehäuse 5 verbundenen Rastarm 48 und endseitig an den Rastarmen 48 angeordneten Rastnasen 49 bestehen, die in entsprechende Ausnehmungen 50 an der Frontplatte 9 des elektrischen Geräts oder der Buchse 8 einrasten.

Da es sich bei den dargestellten Ausführungsbeispielen jeweils um eine Anschlußvorrichtung 1 für ein Lichtwellenleiter-Kabel 2 handelt, ist auch der Stecker 7 entsprechend ausgestaltet. Konkret handelt es sich hierbei um einen S C-Stecker der ein äußeres Steckergehäuse 51 mit zwei jeweils in einem Innengehäuse 52 aufgenommenen Ferrulen 53 aufweist. Die Ferrulen 53, die zur Aufnahme der Fasern der Lichtwellenleiter-Kabel 3, 4 dienen, sind über eine Feder 54 in den Innengehäusen 52 axial verschieblich gelagert. Darüber hinaus sind auch die Innengehäuse 52 relativ zum Steckergehäuse 51 axial verschiebbar angeordnet. Zur Gewährleistung der sicheren und genauen Positionierung der Ferrulen 53 in der Buchse 8 sind die Innengehäuse 52 des Stekkers 7 in entsprechenden Buchseninnengehäusen 55 der Buchse 8 verrastbar.

Zur Entriegelung derartig bekannter SC-Stecker ist es nun erforderlich, daß das Steckergehäuse 51 relativ zu dem Innengehäuse 52 axial um ca. 1 bis 2 mm zurückgezogen wird. Dies kann bei der erfindungsgemäßen Anschlußvorrichtung 1 dadurch erfolgen, daß das mit dem Steckergehäuse 51 axial starr verbundene Gehäuse 5 bzw. das erste Gehäuseteil 11 zurückgezogen wird, so daß sich auch das Steckergehäuse 51 gegenüber den Innengehäusen 52 axial verschiebt, wie dies in Fig. 3b angedeutet ist. Gleichzeitig wird jedoch durch die gegebene axiale Verschiebbarkeit zwischen dem ersten Gehäuseteil 11 und dem zweiten Gehäuseteil 12 bzw. zwischen dem Gehäuse 5 und dem hülsenförmigen Teil 31 ein unerwünschtes und zu Beschädigungen führendes Stauchen des Lichtwellenleiters-Kabels 2 vermieden, da die axiale Verschiebung des ersten Gehäuseteils 11 bzw. des Gehäuses 5 nicht zu einer axialen Verschiebung der Ferrulen 53 oder der mit den Ferrulen 53 verbundenen Lichtwellenleiter 3, 4 gegenüber der Kabelverschraubung 6 führt.

## Patentansprüche

1. Anschlußvorrichtung zum Anschließen eines Kabels, insbesondere eines Lichtwellenleiters (2), an ein elektrisches Gerät, mit einem Gehäuse (5), mit einer Kabelverschraubung (6) und mit einem Stecker (7) zum Einstecken in eine korrespondierende Buchse (8) des elektrischen Geräts, wobei das Gehäuse (5) einen Kabelgang (10) zum Ein- bzw. Durchrühren des Kabels (2) aufweist, der Stecker (7) zumindest teilweise in dem Gehäuse (5) gehalten ist und mit den Fasern bzw. Adern des in den Kabelgang (10) eingeführten Kabels (2) verbindbar ist,
das Gehäuse (5) zweiteilig ausgebildet ist, nämlich ein erstes Gehäuseteil (11) zur Aufnahme des Steckers (7) und ein zweites Gehäuseteil (12) zur Verbindung mit der eine Überwurfmutter (13) aufweisenden Kabelverschraubung (6) aufweist, **dadurch gekennzeichnet,**
**daß** das dem zweiten Gehäuseteil (12) zugeordnete Ende des ersten Gehäuseteils (11) einen Verbindungsbereich (14) aüfweist, der derart ausgebildet ist, daß das erste Gehäuseteil (11) mit dem zweiten Gehäuseteil (12) verbindbar und im verbundenen Zustand axial verschiebbar ist,
wobei am zweiten Gehäuseteil (12) mindestens ein Anschlag und am ersten Gehäuseteil (11) mindestens ein Gegenanschlag ausgebildet ist, so daß das zweite Gehäuseteil (12) und das erste Gehäuseteil (11) um einen definierten Weg axial zueinander verschiebbar sind.

2. Anschlußvorrichtung nach Anspruch 1, **dadurch gekennzeichnet, daß** im Verbindungsbereich (14) des ersten Gehäuseteils (11) mindestens ein Fenster (15) und an der dem ersten Gehäuseteil (11) zugeordneten Seite des zweiten Gehäuseteils (12) mindestens ein Rastarm (16) mit einem Vorsprung (17) ausgebildet ist, wobei der Vorsprung (16) im.verbundenen Zustand von erstem Gehäuseteil (11) und zweitem Gehäuseteil (12) in das Fenster (15) eingreift.

3. Anschlußvorrichtung nach Anspruch 2, **dadurch gekennzeichnet, daß** der Vorsprung (17) am Rastarm (16) eine Einführschräge (18) und eine Stufe (19) aufweist, daß am ersten Gehäuseteil (11) ein zweiter Anschlag (22) ausgebildet ist, und daß in der ersten Position des ersten Gehäuseteils (11) der erste Rand (20) des Fensters (15) an der Stufe (19) des Vorsprungs (17) und in der zweiten - axial verschobenen - Position des ersten Gehäuseteils (11) das freie Ende (21) des Rastarms (16) am zweiten Anschlag (22) anliegt.

4. Anschlußvorrichtung nach Anspruch 1, **dadurch gekennzeichnet, daß** im Verbindungsbereich (14) des ersten Gehäuseteils (11) mindestens eine Lasche und an der dem ersten Gehäuseteil (11) zugeordneten Seite des zweiten Gehäuseteils (12) mindestens ein Rastarm (16) mit einem Vorsprung (17) ausgebildet ist, wobei sich der Rastarm (16) im verbundenen Zustand von erstem Gehäuseteil (11) und zweitem Gehäuseteil (12) durch die Lasche erstreckt.

5. Anschlußvorrichtung nach Anspruch 4, **dadurch gekennzeichnet, daß** der Vorsprung (17) am Rastarm (16) eine Einfiihrschräge (18) und eine Stufe (19) aufweist, daß am zweiten Gehäuseteil (12) ein zweiter Anschlag ausgebildet ist, und daß in der ersten Position des ersten Gehäuseteils (11) die dem zweiten Gehäuseteil..(12) abgewandten Kante der Lasche an der Stufe (19) des Vorsprungs (17) und in der zweiten - axial verschobenen - Position des ersten Gehäuseteils (11) die dem zweiten Gehäuseteil (12) zugewandte Stirnseite des ersten Gehäuseteils (11) am zweiten Anschlag anliegt.

6. Anschlußvorrichtung nach einem der Ansprüche 1 bis 5, **dadurch gekennzeichnet; daß** an der dem ersten Gehäuseteil (11) zugeordneten Seite des zweiten.Gehäuseteils (12) ein zylindrischer Fortsatz (23) ausgebildet ist, der sich im verbundenen Zustand von ersten Gehäuseteil (11) und zweiten Gehäuseteil (12) in das erste Gehäuseteil (11) erstreckt.

7. Anschlußvorrichtung nach Anspruch 6, **dadurch gekennzeichnet, daß** im Verbindungsbereich (14) des ersten Gehäuseteils (11) und/oder am Fortsatz (23) des zweiten Gehäuseteils (12) eine Nut (24) zur Aufnahme eines Dichtelements (25) ausgebildet ist, wobei das Dichtelement (25) so ausgebildet bzw. angeordnet ist, daß es die axiale Verschiebung zwischen dem ersten Gehäuseteil (11) und dem zweiten Gehäuseteil (12) zuläßt.

8. Anschlußvorrichtung nach einem der Ansprüche 1 bis 7, **dadurch gekennzeichnet, daß** das erste Gehäuseteil (11) und das zweite Gehäuseteil (12) verdrehsicher miteinander verbindbar, insbesondere verrastbar sind.

9. Anschlußvorrichtung nach einem der Ansprüche 1 bis 8, **dadurch gekennzeichnet, daß** das zweite Gehäuseteil (12) an dem der Kabelverschraubung (6) zugeordneten Ende ein mit dem Innengewinde (27) der Überwurfmutter (13) korrespondierendes Außengewinde (28) und eine Dichtungskrone (29) aufweist.

10. Anschlußvorrichtung zum Anschließen eines Kabels, insbesondere eines Lichtwellenleiters (2), an ein elektrisches Gerät, mit einem Gehäuse (5), mit einer Kabelverschraubung (6) und mit einem Stecker (7) zum Einstecken in eine korrespondierende Buchse (8) des elektrischen Geräts, wobei das Gehäuse (5) einen Kabelgang (10) zum Ein- bzw. Durchführen des Kabels (2) aufweist, der Stecker (7) zumindest teilweise in dem Gehäuse (5) gehalten ist und
mit den Fasern bzw. Adern des in den Kabelgang (10) eingeführten Kabels (5) verbindbar ist,
die Kabelverschraubung (6) zweiteilig ausgebildet ist, nämlich ein hülsenförmiges Teil (31) mit einem Außengewinde (32) und eine auf das hülsenförmige Teil (31) aufschraubbare Überwurfmutter (13) mit einem korrespondierenden Innengewinde (27) aufweist, **dadurch gekennzeichnet,**
**daß** das der Kabelverschraubung (6) zugeordnete Ende des Gehäuses (5) einen Verbindungsbereich (33) aufweist, der derart ausgebildet ist, daß das hülsenförmige Teil (31) mit dem Verbindungsbereich (33) verbindbar ist, und im verbundenen Zustand das Gehäuse und das hülsenförmige Teil (31) relativ zueinander axial verschiebbar sind,
wobei im hülsenförmigen Teil (31) der Kabelverschraubung (6) mindestens ein Anschlag und am Verbindungsbereich (33) des Gehäuses (5) mindestens ein Gegenanschlag ausgebildet ist, so daß das Gehäuse (5) und das hülsenförmige Teil (31) um einen definierten Weg axial zueinander verschiebbar sind.

11. Anschlußvorrichtung nach Anspruch 10, **dadurch gekennzeichnet, daß** im hülsenformigen Teil (31) der Kabelverschraubung (6) mindestens eine Ausnehmung (34) und am Verbindungsbereich (33) des Gehäuses (5) mindestens ein Vorsprung (35) ausgebildet ist, wobei der Vorsprung (35) im verbundenen Zustand von Gehäuse (5) und hülsenformigem Teil (31) der Kabelverschraubung (6) in die Ausnehmung (34) eingreift, so daß das Gehäuse (5) um den definierten Weg axial verschiebbar ist:

12. Anschlußvorrichtung nach Anspruch 11, **dadurch gekennzeichnet, daß** der Vorsprung (35) am Verbindungsbereich (31) des Gehäuses (5) eine Einführschräge (36) und eine Stufe (37) aufweist, und daß in der ersten Position des Gehäuses (5) die Stufe (37) des Vorsprungs (35) am ersten Rand (38) der Ausnehmung (34) und in der zweiten - axial verschobenen - Position des Gehäuses (5) die Stirnseite (39) des Verbindungsbereichs (31) am gegenüberliegenden Rand (40) der Ausnehmung (34) anliegt.

13. Anschlußvorrichtung nach einem der Ansprüche 10 bis 12, **dadurch gekennzeichnet, daß** im Verbindungsbereich (33) des Gehäuses (5) und/oder im hülsenförmigen Teil (31) der Kabelverschraubung (6) eine Nut (41) zur Aufnahme eines Dichtelements (42) ausgebildet ist, wobei das Dichtelement (42) so ausgebildet bzw. angeordnet ist, daß es die axiale Verschiebung zwischen dem Gehäuse (5) und dem hülsenförmigen Teil (31) der Kabelverschraubung (6) zuläßt.

14. Anschlußvorrichtung nach einem der Ansprüche 10 bis 13, **dadurch gekennzeichnet, daß** das der Überwurfmutter (13) zugeordneten Ende des hülsenförmigen Teils (31) der Kabelverschraubung (6) als Dichtungskrone (43) ausgebildet ist und eine darin angeordnete Kabeldichtung (44) aufweist.

15. Anschlußvorrichtung nach einem der Ansprüche 1 bis 14, **dadurch gekennzeichnet, daß** die Kabelverschraubung (6) eine mit der Überwurfmutter (13) verbundene Knickschutztülle (45) anfweist.

16. Anschlußvorrichtung nach einem der Ansprüche 1 bis 15, **dadurch gekennzeichnet, daß** an dem Gehäuse (5) bzw. dem ersten Gehäuseteil (11) mindestens zwei federnde Rastmittel (46) zur mechanischen Fixierung an der Buchse (8) bzw. an dem elektrischen Gerät angeordnet sind.

17. Anschlußvorrichtung nach einem der Ansprüche 1 bis 16, zum Anschließen eines Lichtwellenleiterkabels (2), **dadurch gekennzeichnet, daß** der Stekker (7) ein äußeres Steckergehäuse (51) mit mindestens einer in einem Innengehäuse (52) aufgenommenen Ferrule (53) aufweist, wobei das Innengehäuse (52) relativ zum Steckergehäuse (51) axial verschiebbar und in einem korrespondierenden Buchseninnengehäuse (55) verriegelbar ist, das Steckergehäuse (51) axial starr mit dem Gehäuse (5) bzw. dem ersten Gehäuseteil (11) und die Ferrule(53) mit dem Lichtwellenleiter (3, 4) verbindbar ist.

18. Anschlußvorrichtung nach Anspruch 17, **dadurch gekennzeichnet, daß** der Stecker (7) ein SC-Stecker, insbesondere ein SC-Duplex-Stecker oder ein SC-RJ-Stecker ist.

## Claims

1. Connection device for connecting a cable, in particular an optical waveguide (2), to an electrical device, comprising a housing (5), a cable gland (6) and a plug (7) for insertion into a corresponding socket (8) of the electrical device, wherein the housing (5) has a cable passage (10) for insertion or passage of the cable (2), the plug (7) being held at least partially in the housing (5) and being connectable to fibers or cores of the cable (2) when the cable is inserted into the cable passage (10), the housing (5) being formed in two parts, namely a first housing part (11) for holding the plug (7) and a second housing part (12) for connection to the cable gland (6) having a union nut (13),
**characterized in**
**that** an end of the first housing part (11) assigned to the second housing part (12) has a connecting area (14), which is formed in such a manner that the first housing part (11) is connectable to the second housing part (12) in a manner enabling axial movement in a connected state thereof,
wherein at least one stop is provided on the second housing part (12) and at least one opposing stop is formed on the first housing part (11) so that the second housing part (12) and the first housing part (11) can be axially shifted to one another with a defined extent.

2. Connection device according to claim 1, **characterized in that** at least one window (15) is formed in the connecting area (14) of the first housing part (11) and at least one catch arm (16) with a projection (17) is formed on a side of the second housing part (12) which is assigned to the first housing part (11), wherein the projection (16) engaging the at least one window (15) in the connected state of the first and second housing parts (11, 12).

3. Connection device according to claim 2, **characterized in that** the projection (17) on the catch arm (16) has an entry bevel (18) and a step (19), that a second stop (22) is formed on the first housing part (11) and that the first edge (20) of the window (15) adjoins the step (19) of the projection (17) in a first position of the first housing part (11), and in an axially shifted second position of the first housing part (11), the free end (21) of the catch arm (16) adjoins the second stop (22).

4. Connection device according to claim 1, **characterized in that** at least one saddle is formed in the connecting area (14) of the first housing part (11) and at least one catch arm (16) with a projection (17) is formed on the side of the second housing part (12) assigned to the first housing part (11), wherein the catch arm (16) extends through the saddle in the connected state of the first housing part (11) with the second housing part (12).

5. Connection device according to claim 4, **characterized in that** the projection (17) on the catch arm (16) has an entry bevel (18) and a step (19), that a second stop is formed on the second housing part (12), and that an edge of the saddle facing away from the second housing part (12) adjoins the step (19) of the projection (17) in a first position of the first housing part (11) and, in an axially shifted second position of the first housing part (11), a front of the first housing part (11) which faces the second housing part (12) adjoins the second stop.

6. Connection device according to any one of claims 1 to 5, **characterized in that** a cylindrical extension (23) is formed on a side of the second housing part (12) assigned to the first housing part (11), and that the cylindrical extension (23) extends into the first housing part (11) in the connected state of the first housing part (11) with the second housing part (12).

7. Connection device according to claim 6, **characterized in that** a groove (24) for holding a sealing element (25) is formed in the connecting area (14) of the first housing part (11) and/or at the extension (23) of the second housing part (12), wherein the sealing element (25) is formed and arranged such that it allows axial movement between the first housing part (11) and the second housing part (12).

8. Connection device according to any one of claims 1 to 7, **characterized in that** the first housing part (11) and the second housing part (12) are lockable in a connected state, in particular can be click-locked.

9. Connection device according to any one of claims 1 to 8, **characterized in that** the second housing part (12) has on an end facing the cable gland (6) both an outside thread (28) which corresponds to an inside thread (27) of the union nut (13) and a seal crown (29).

10. Connection device for connecting a cable, in particular an optical waveguide (2) to an electrical device, comprising a housing (5), a cable gland (6), and a plug (7) for insertion into a corresponding socket (8) of the electrical device, wherein the housing (5) has a cable passage (10) for insertion or passage of the cable (2), the plug (7) being held at least partially in the housing (5) and being connectable to fibers or cores of the cable (2) when the cable is inserted into the cable passage (10), the cable gland (6) being formed in two parts, namely a sleeve-shaped part (31) having an outside thread (32) and a union nut (13) having a corresponding inside thread (27) that can be screwed onto the sleeve-shaped part (31),
**characterized in**
**that** the end of the housing (5) assigned to the cable gland (6) has a connecting area (33), which is formed in such a manner that the sleeve-shaped part (31) is connectable to the connecting area (33) in a manner enabling axial movement of the housing and the sleeve-shaped part (31) in a connected state thereof,
wherein at least one stop is formed in the sleeve-shaped part (31) of the cable gland (6) and at least one opposing stop is formed on the connecting area (33) of the housing (5), so that the housing (5) and the sleeve-shaped part (31) can be axially shifted to one another with a defined extent.

11. Connection device according to claim 10, **characterized in that** at least one recess (34) is formed in the sleeve-shaped part (31) of the cable gland (6) and at least one projection (35) is formed on the connecting area (33) of the housing (5), wherein the projection (35) is engaged in the recess (34) in the connected state of the housing (5) and the sleeve-shaped part (31) of the cable gland (6), so that the housing (5) can be axially shifted by said defined extent.

12. Connection device according to claim 11, **characterized in that** the projection (35) on the connection area (33) of the housing (5) has an entry bevel (36) and a step (37), and wherein the step (37) of the projection (35) adjoins the first edge (38) of the recess (34) in the first position of the housing (5), and wherein the front (39) of the connecting area (33) adjoins an opposing edge (40) of the recess (34) in the second, axially shifted position of the housing (5).

13. Connection device according to any one of claims 10 to 12, **characterized in that** a groove (41) for holding a sealing element (42) is formed in the connecting area (33) of the housing (5) and/or in the sleeve-shaped part (31) of the cable gland (6), wherein the sealing element (42) is formed or arranged such that it allows axial movement between the housing (5) and the sleeve-shaped part (31) of the cable gland (6).

14. Connection device according to any one of claims 10 to 13, **characterized in that** the end of the sleeve-shaped part (31) of the cable gland (6) assigned to the union nut (13) is formed as a seal crown (43) and has a cable seal (44) arranged therein.

15. Connection device according to any one of claims 1 to 14, **characterized in that** the cable gland (6) has an anti-kink sleeve (45) connected to the union nut (13).

16. Connection device according to any one of claims 1 to 15, **characterized in that** at least two elastic catch means (46) for mechanical fixing to the socket (8) or to the electrical device are provided on the housing (5) or on the first housing part (11).

17. Connection device according to any one of claims 1 to 16 for connecting an optical waveguide cable (2), **characterized in that** the plug (7) has an outer plug housing (51) with at least one ferrule (53) held in an inner housing (52), the inner housing (52) being axially movable relative to the plug housing (51) and being lockable in a corresponding socket inner housing (55), the plug housing (51) being axially rigidly connectable to the housing (5) or, respectively the first housing part (11) and the ferrule (53) being connectable to the optical waveguide (3, 4).

18. Connection device according to claim 17, **characterized in that** the plug (7) is a SC plug, in particular a SC Duplex plug or a SCRJ plug.

## Revendications

1. Dispositif de raccordement destiné à raccorder un câble, en particulier un guide d'ondes optique (2), à un dispositif électrique, comprenant une enveloppe (5), un serre-câble (6) et un connecteur (7) destiné à être inséré dans une douille correspondante (8) du dispositif électrique, dans lequel l'enveloppe (5) présente un passage de câble (10) pour insérer ou faire passer le câble (2), dans lequel le connecteur (7) est au moins partiellement maintenu dans l'enveloppe (5) et peut être relié aux fibres ou aux brins du câble (2) inséré dans le passage de câble (10), l'enveloppe (5) est réalisée en deux parties, à savoir une première partie d'enveloppe (11) destinée à recevoir le connecteur (7) et une deuxième partie d'enveloppe (12) destinée à être reliée au serre-câble (6) comportant un écrou de raccordement (13),
**caractérisé en ce**
**que** l'extrémité de la première partie d'enveloppe (11) qui est associée à la deuxième partie d'enveloppe (12) présente une zone de connexion (14) qui est conçue de telle sorte que la première partie d'enveloppe (11) puisse être connectée à la deuxième partie d'enveloppe (12) et puisse être déplacée axialement à l'état connecté,
dans lequel au moins une butée est formée sur la deuxième partie d'enveloppe (12) et au moins une contrebutée est formée sur la première partie d'enveloppe (11) de telle sorte que la deuxième partie d'enveloppe (12) et la première partie d'enveloppe (11) puissent être déplacées axialement d'une distance définie l'une par rapport à l'autre.

2. Dispositif de raccordement selon la revendication 1, **caractérisé en ce qu'**au moins une fenêtre (15) est formée dans la zone de connexion (14) de la première partie d'enveloppe (11) et **en ce qu'**au moins un bras de verrouillage (16) présentant une protubérance (17) est formé du côté de la deuxième partie d'enveloppe (12) qui est associé à la première partie d'enveloppe (11), dans lequel la protubérance (16) s'encliquète dans la fenêtre (15) dans l'état connecté de la première partie d'enveloppe (11) et de la deuxième partie d'enveloppe (12).

3. Dispositif de raccordement selon la revendication 2, **caractérisé en ce que** la protubérance (17) présente sur le bras de verrouillage (16) un chanfrein (18) et un échelon (19), **en ce qu'**une deuxième butée (22) est formée sur la première partie d'enveloppe (11), et **en ce que** le premier bord (20) de la fenêtre (15) est en butée sur l'échelon (19) de la protubérance (17) à la première position de la première partie d'enveloppe (11), et l'extrémité libre (21) du bras de verrouillage (16) est en butée sur la deuxième butée (22) à la deuxième position, décalée axialement, de la première partie d'enveloppe (11).

4. Dispositif de raccordement selon la revendication 1, **caractérisé en ce qu'**au moins une patte est formée dans la zone de connexion (14) de la première partie d'enveloppe (11) et au moins un bras de verrouillage (16) présentant une protubérance (17) est formé du côté de la deuxième partie d'enveloppe (12) qui est associé à ladite première partie d'enveloppe (11), dans lequel le bras de verrouillage (16) s'étend à travers la patte dans l'état connecté de la première partie d'enveloppe (11) et de la deuxième partie d'enveloppe (12).

5. Dispositif de raccordement selon la revendication 4, **caractérisé en ce que** la protubérance (17) présente sur le bras de verrouillage (16) un chanfrein (18) et un échelon (19), **en ce qu'**une deuxième butée est formée sur la deuxième partie d'enveloppe (12), et **en ce que** le bord de la patte qui est tourné à l'opposé de la deuxième partie d'enveloppe (12) est en butée sur l'échelon (19) de la protubérance (17) à la première position de la première partie d'enveloppe (11), et la face d'extrémité de la première partie d'enveloppe (11) qui est tournée vers la deuxième partie d'enveloppe (12) est en butée sur la deuxième butée à la deuxième position, décalée axialement, de la première partie d'enveloppe (11).

6. Dispositif de raccordement selon l'une quelconque des revendications 1 à 5, **caractérisé en ce qu'**un prolongement cylindrique (23) est formé du côté de la deuxième partie d'enveloppe (12) qui est associé à la première partie d'enveloppe (11), ce prolongement cylindrique s'étendant dans la première partie d'enveloppe (11) dans l'état connecté de la première partie d'enveloppe (11) et de la deuxième partie d'enveloppe (12).

7. Dispositif de raccordement selon la revendication 6, **caractérisé en ce qu'**une rainure (24) est formée dans la zone de liaison (14) de la première partie d'enveloppe (11) et/ou sur le prolongement (23) de la deuxième partie d'enveloppe (12) pour la réception d'un élément d'étanchéité (25), dans lequel l'élément d'étanchéité (25) est réalisé ou agencé de manière à permettre le déplacement axial entre la première partie d'enveloppe (11) et la deuxième partie d'enveloppe (12).

8. Dispositif de raccordement selon l'une quelconque des revendications 1 à 7, **caractérisé en ce que** la première partie d'enveloppe (11) et la deuxième partie d'enveloppe (12) sont reliées l'une à l'autre de manière tournante, et plus particulièrement, de manière verrouillable.

9. Dispositif de raccordement selon l'une quelconque des revendications 1 à 8, **caractérisé en ce que** la deuxième partie d'enveloppe (12) présente, à l'extrémité qui est associée au serre-câble (6), un filetage extérieur (28) correspondant au filetage intérieur (27) de l'écrou de raccordement (13) et une bague d'étanchéité (29).

10. Dispositif de raccordement destiné à raccorder un câble, en particulier un guide d'ondes optique (2), à un dispositif électrique, comprenant une enveloppe (5), un serre-câble (6) et un connecteur (7) destiné à être insérée dans une douille correspondante (8) du dispositif électrique, dans lequel l'enveloppe (5) présente un passage de câble (10) pour insérer ou faire passer le câble (2), dans lequel le connecteur (7) est au moins partiellement maintenu dans l'enveloppe (5) et peut être relié aux fibres ou aux brins du câble (2) inséré dans le passage de câble (10), le serre-câble (6) est réalisé en deux parties, à savoir qu'il présente une partie formant manchon (31) comportant un filetage extérieur (32) et un écrou de raccordement (13) comportant un filetage intérieur correspondant (27) pouvant être vissé sur la partie formant manchon (31),
**caractérisé en ce**
**que** l'extrémité de l'enveloppe (5) qui est associée au serre-câble (6) présente une zone de connexion (33) qui est conçue de telle sorte que la partie formant manchon (31) puisse être connectée à la zone de connexion (33), et que, dans l'état connecté, l'enveloppe et la partie formant manchon (31) peuvent être déplacés axialement l'une par rapport à l'autre,
dans lequel au moins une butée est formée dans la partie formant manchon (31) du serre-câble (6) et au moins une contrebutée est formée dans la zone de connexion (33) de l'enveloppe (5) de telle sorte que l'enveloppe (5) et la partie formant manchon (31) puissent être déplacées axialement d'une distance définie l'une par rapport à l'autre.

11. Dispositif de raccordement selon la revendication 10, **caractérisé en ce qu'**au moins un évidement (34) est formé dans la partie formant manchon (31) du serre-câble (6) et **en ce qu'**au moins une protubérance (35) est formée dans la zone de connexion (33) de l'enveloppe (5), dans lequel la protubérance (35) s'encliquette dans l'évidement (34) à l'état connecté de l'enveloppe (5) et de la partie formant manchon (31) du serre-câble (6), de telle sorte que l'enveloppe (5) puisse être déplacée axialement de la distance définie.

12. Dispositif de raccordement selon la revendication 11, **caractérisé en ce que** la protubérance (35) présente dans la zone connexion (31) de l'enveloppe (5) un chanfrein (36) et un échelon (37), et **en ce que** l'échelon (37) de la protubérance (35) est en butée sur le premier bord (38) de l'évidement (34) à la première position de l'enveloppe (5), et la face d'extrémité (39) de la zone de connexion (31) est en butée sur le bord opposé (40) de l'évidement (34) à la deuxième position, décalée axialement, de l'enveloppe (5).

13. Dispositif de raccordement selon l'une quelconque des revendications 10 à 12, **caractérisé en ce qu'**une gorge (41) destinée à recevoir un élément d'étanchéité (42) est formée dans la zone de connexion (33) de l'enveloppe (5) et/ou dans la partie formant manchon (31) du serre-câble (6), dans lequel l'élément d'étanchéité (42) est conçu ou agencé de manière à permettre le déplacement axial entre l'enveloppe (5) et la partie formant manchon (31) du serre-câble (6).

14. Dispositif de raccordement selon l'une quelconque des revendications 10 à 13, **caractérisé en ce que** l'extrémité de la partie formant manchon (31) du serre-câble (6) qui est associée à l'écrou de raccordement (13) est réalisée sous la forme d'une bague d'étanchéité (43) et présente à l'intérieur de celle-ci un élément d'étanchéité de câble (44).

15. Dispositif de raccordement selon l'une quelconque des revendications 1 à 14, **caractérisé en ce que** le serre-câble (6) comprend un réducteur de tension (45) relié à l'écrou de raccordement (13).

16. Dispositif de raccordement selon l'une quelconque des revendications 1 à 15, **caractérisé en ce qu'**au moins deux moyens de verrouillage élastiques (46) sont disposés sur l'enveloppe (5) ou la partie d'enveloppe (11) pour la fixation mécanique à la douille (8) ou au dispositif électrique.

17. Dispositif de raccordement selon l'une quelconque des revendications 1 à 16, destiné à raccorder un câble à guide d'ondes optique (2), **caractérisé en ce que** le connecteur (7) présente une enveloppe extérieure de connecteur (51) comportant au moins une virole (53) reçue dans une enveloppe intérieure (52), dans lequel l'enveloppe intérieure (52) peut être déplacée axialement par rapport à l'enveloppe de connecteur (51) et peut être verrouillée dans une enveloppe intérieure de douille (55) correspondante, et l'enveloppe de connecteur (51) peut être reliée de manière axialement solidaire de l'enveloppe (5) ou de la première partie d'enveloppe (11) et la virole (53) peut être reliée au guide d'ondes optique (3, 4).

18. Dispositif de raccordement selon la revendication 17, **caractérisé en ce que** le connecteur (7) est un connecteur SC, notamment un connecteur SC-duplex ou un connecteur RJ-SC.
